# EUROPEAN PATENT APPLICATION

(11) **EP 2 703 096 A2**
(43) Date of publication of application: **05.03.2014**
(21) Application number: 12461542.8
(22) Date of filing: 11.09.2012
(51) Int. Cl.: B09B 3/00, B62D 67/00, C10B 53/07

(54) **Process line for automotive scrap processing**

(30) Priority: 28.08.2012 PL 40053412
(71) Applicant: Polcopper Sp. z o.o., 64-030 Smigiel (PL)
(72) Inventor: Nowak, Grzegorz, 62-030 Lubon (PL); Jader, Piotr, 64-115 Swieciechowa (PL)
(74) Representative: Lisiecki, Wojciech

(57) **Abstract**

Process line (30) for the processing of scrapped cars containing a power supply system (50), control system (51), separators (48), a mill (31) and - at the same time or as an alternative - a shredding crusher (2) having a shredding chamber (52), a grid (53), a power unit (54) and a shaft (55) coupled with the power unit (54) equipped with hammers (56) mounted on the shaft (55) and shifted with respect to each other. The process line (30) is additionally equipped with an automatic separator of car tyres (29) which is connected via at least one buffer container (33) with a furnace-reaction system (22) equipped with at least one revolving reaction furnace (23), containers (24) for pyrolysis products, power supply system (25), cooling system (26), heating system (27) and a flue gas evacuation system (28).

## Description

The invention consists of a process line for the processing of automotive scrap, in particular, car bodies, especially for their cutting and shredding in the process of the recycling of scrapped and worn or post-accident, substantially complete cars.

It is commonly known that a scrapped car contains parts and components made of various materials. It is also known that it is beneficial to reduce the size of scrapped cars. Their disposal involves, in particular, the fragmentation and selection of components, which is beneficial for the very possibility of reuse of materials such components were initially made of.

In particular, metal is recovered after the initial disassembly and separation of plastic components and seats from inside the car body.

The PL 189873 invention has already made known the issue of the compaction and cutting of dismantled spatial structures, in particular, car bodies for the purpose of their recycling for reuse. The dismantled spatial structure, in particular, a car body is introduced to the frame of the hydraulic stamping press on which a sliding system controlled with the use of a hydraulic shift moves it cyclically to a deflected slide of the press controlled by side hydraulic actuator with the preceding stamping component and a contoured stamping surface with the stepped crumple zone, which stamp the cyclically moved sections of that structure and, subsequently, cut with the use of a hydraulic guillotine device. Each movement cycle of that structure is followed by a stamping condensation cycle of subsequent sections in the structure and a parallel cycle of their renewed cutting.

Additionally, a device for the stamping of car bodies is also known from the PL192146 patent. The device is in the form of a clamp mechanism consisting of a platform on which a scrapped body is placed and a rotational sliding stamping plate above it whose top part is pivotally connected with two actuators pivotally mounted in the cross beam between two columns rested on a platform. One end of the stamping plate is pivotally connected to the first arms of fork levers whose long arms are pivotally connected to two additional actuators pivotally connected to a platform between the columns. The fork levers are mounted on a shaft supported with bearings under a cross beam crowning the columns.

Both known examples undoubtedly reduce the spatial size of the stamped car bodies but do not shred them into small pieces, which is not beneficial as a worn and scrapped car still contains various types of material fractions even after it is dismantled. The recycling process is insufficient if the agglomerated fragments contain improper fractions where metals can still be combined with a significant percentage of rubber.

In turn, the Polish submission of PLN 397158 shows a process line for the processing of metallic raw materials, in particular, the shredding of metallic products of normal size and sorting their shreds, containing a power unit, control system, a mill and/or a shredding crusher and separators with the mill and/or shredding crusher having a shredding chamber, a grid, a driving system and a coupled shaft with hammers mounted on the shaft and shifted with respect to each other at the 90° angle; the grid has channels and is placed beneath the shaft with hammers in the shredding chamber while separators are connected to a mill with a system of feeders. The line contains nozzles spraying an impregnation preparation. The control system can be controlled via a computer, also remotely, and a separator can be magnetic and/or drum and/or pneumatic and/or gravitational.

After an adjustment of its dimensions, that line could be suitable as a significantly better way of utilization with the recycling of car bodies as well. However, despite such an appropriate structure of the process line for shredding, a significant bulk of rubber is left that is principally useless in recovered metal fractions and its separation is relatively difficult. The trouble with rubber separation is due to the fact that car tyres that contain wire metal components constitute the source of its greatest bulk. Because of that, rubber separation can be disturbed due to the wire placed on the tyre envelope, which can be treated in separators as a metal fraction with a part of the shredded tyre, which is not good.

The submission PL353654 shows us a device for tyre shredding containing a bearing structure on which a rotational flip column with a tubular retaining handle for the shredded tyres blocked in place with the use of support expansion clamps is mounded on one side. The rotational flip column changes its axial position thanks to a reduction torque while a toothed ring mounted on it and operating with a driving gear wheel receiving the working movement from the driving engine via a belt drive provides the rotation. In the bottom space of the machining tool, there is a suction nozzle of an anchor unit installed with the transport ventilator transporting the shredded rubber to the storage area.

From the invention PL 200839, we know the invention of a waste shredder such as a double-rotor shredder of car tyres. The shredder has at least one rotor with at least one cutting wheel consisting of: a rink support moved by a shaft with many circumferential sections, numerous cutting knives placed in correlation to the sections. Cutting knives protrude radially from the circumferential surface of the ring support.

In turn, the submission PL393283 describes a process line for granulate production, especially from car tyres, which is equipped with a shredder having a sorter for the separation of pieces of the raw material sized in excess of 25x25 mm and a belt conveyor for its transport and reloading, a disintegrator equipped with a set of magnetic separators and a device pressing the separated steel. The disintegrator has a set of sieve machines combined with a granulator and silos for fine fractions, combined with a fine fraction granulate separator and, subsequently, with vibrating cleaners and with purified granulate containers.

The known structures presented last refer to a possibility of an independent recovery of material from tyres in themselves being detrimental to the car body scraping and recycling process. The latter solutions also provide for the possibility of rubber separation from the wire placed in the tyre envelope even though the separation is not sufficiently good because it is not possible to do it mechanically and attain a satisfactory result.

In the light of these facts, a more time-consuming but the most effective method was developed for the separation and recovery of wire cord from tyres with simultaneous advantageous transformation of the remaining rubber material into oil, gases and soot demonstrating sorbent properties. That process is pyrolysis and the equipment necessary for that purpose consists of a furnace-reaction system with containers of products of pyrolysis, power supply system, cooling system, heating system and the flue gas evacuation system.

These solutions, in turn, are known from a range of inventions, for example: PL179990, PL195737, PL190951 and, e.g. from the submission PL388394.

However, these constructions independently assume that the tyre material will be selected already and, both in the case of the car body processing and the tyre utilization or recycling, there is no indicated end-to-end solution for the acquisition of tyres in the process of their automatic separation from car wheels or, what is more, their separation from complete motor cars. There is also no construction providing an end-to-end solution of the used car utilization issue and, at the same time, thanks to which highly uniform materials can be recovered and even a simultaneous attainment of alternative oil fuel or other substances beneficial for various processes is possible, e.g. sorbents, heating gases, half-processed carbon fractions or active carbon.

The goal of the solution provided by the invention is to combine the structure thanks to which the acquisition of car tyres in the processing of scrapped cars will be automated along with their separation from the metallic material, which will significantly and beneficially influence the uniformity of the metallic material acquisition with the simultaneous possibility of acquisition of useful substances processed to a finished form, which have never before been obtained automatically or even semi-automatically in the known processes of used car processing.

The attainment of the goal in line with the invention will also shorten the time needed for the processing of scrapped cars, e.g. for the manual dismantling of tyres before the processing of scrapped cars or automatic sorting of the not fully uniform metallic material after its disintegration without such a separation.

Tyres have a significant share in the total bulk and can amount to a few percent of the weight of the partially dismantled scrapped car, which means that they can significantly disturb the process of acquisition of the metallic material or provide a measurable material benefit in the form of new and immediately useful substances.

The process line for the processing of scrapped cars and, in particular, their recycling according to the invention contains a power supply system, control system, separators, a mill and - at the same time or as an alternative - a shredding crusher. The mill and, at the same time or as an alternative, the shredding crusher have a shredding chamber, a grid, a power unit and a shaft coupled with the power unit and equipped with hammers mounted on the shaft and shifted with respect to each other; the grid has channels and is located beneath the shaft with hammers in the shredding chamber while separators are connected to a mill or a shredding crusher with a system of feeders The process line is equipped with an automatic separator of car tyres located in the process line in front of the mill and, at the same time or as an alternative, in front of the shredding crusher. The separator of car tyres is also connected via a system of feeders and at least one buffer container with the furnace-reaction system and the furnace-reaction system is equipped with at least one revolving reaction furnace, containers for pyrolysis products, power supply system, cooling system, heating system and a flue gas evacuation system. The separator of car tyres is equipped with a transport system mounted on a frame attached to the ground and the transport system is controlled via barrier infrared sensors with a transport system slide engine. The transport system has a scuffing tool inside or is separated with a scuffing tool under which an electrically controlled saw is installed on a drawout actuator. The scuffing tool is made of at least two rotating rollers oriented parallel to each other on which friction components are arranged on the envelope. The rollers turn in opposite directions to the inside and down, with the top surface of rollers located on the height of the transport system while a feeder system conveyor is located under the slit between the rollers. The scuffing tool, its turning rollers and the drawout actuator as well as the saw are switched on via barrier infrared sensors. Other separators can consist of a magnetic separator and, at the same time or as an alternative, a drum separator and/or gravitational separator. The furnace-reaction system can be multiplied or any of its components can be multiplied. Additionally, barrier infrared sensors can be multiplied to control the feed of the transport system, its slowing down or halt, start up or acceleration. The car tyre separator transport system can contain two conveyors located on the same plane one behind another; the conveyor can be in the form of a roller, belt or a chain conveyor. The shifter engine of the transport system can be multiplied and include a few units to gain power or to distribute the drive to individual belt conveyors. The scuffing tool can also be multiplied with another scuffing tool oriented parallel next to each other in the axis of the slit between the rollers, symmetrically on two sides of the transport system. It is purposeful because, in such a situation, a single pair of tyres from the car body is removed at the same time. The drawout actuator with the saw can be multiplied to guarantee a faster completion of the process; in such a situation, they are oriented parallel to each other and symmetrically on both sides of the transport system. It would be beneficial for the saw to be a circular one. It would be beneficial for friction components to be bolts or barbs or heels or a bearing surface with a high friction coefficient. The drawout actuator is hydraulically or pneumatically controlled and the drawout of the actuator can be adjustable. The furnace-reaction system can contain such components as: an initial separator, heavy oil container, soot transporter from the reactor, catalyst column, piping, condensation-drainage container, a cooler, water fuse, atomizer column with the column container, sprinkler pump, a column with active carbon, ventilator, smoke evacuation channel, a blower, oil burner, gas burner - they can be assigned to one of the systems indicated above. The process line can be controlled remotely or via a computer.

The solution according to the invention operates, as follows:

As soon as a scrapped car is placed on the car tyre separator transport system, the first barrier of infrared sensors is broken, which triggers the switch-on of the transport system shift engine. When a car tyre breaks the next infrared barrier or barrier infrared sensors, the shift engine reduces the speed of the transport system and, finally, halts the car currently located in the car tyre separator. Additionally, when a car wheel breaks the second infrared barrier, the drawout actuator and the saw will be triggered. After the completion of the cutting cycle, the actuator will recede and the saw will be switched off at the same time while the transport system shift engine will switch on and relocate the car to the scuffing tool. When the barrier of infrared sensors verifying the position of a wheel is triggered again, the scuffing tool is switched on and drags the tyre from the car wheel to the slit between the revolving rollers. It will be possible because, when moving above one of the scuffing tool's rollers, the wheel will turn a certain angle as a result of which the cutting line will not be located exactly between the revolving rollers. The removed tyre will be introduced to the system of feeders and, subsequently, to the buffer container from which it will be collected and fed to the furnace-reaction system in which it will be subjected to the known process of car tyre pyrolysis.

In turn, after the removal of tyres from one axle of the car, the movement of the transport system continues until the second barrier of infrared sensors is broken; after that, when the wheels of another axle of the car move, the control will operate identically. The car with removed tyres is fed via a system of feeders to the mill or to the shredding crusher where the known process of utilization and recycling of metallic components from the scrapped car takes place; as a result of the removal of tyres from the car, more uniform and homogenous metal fractions without pollution from the rubber material containing residual metallic components in the form of the wire cord are obtained in the process. In turn, the known process of pyrolysis to which tyres from the buffer containers are fed results in the acquisition of the relatively pure metal cord (after the shaking) that, in the course of that process, acquires properties beneficial for further use, i.e. becomes less elastic and more suitable for baling in the baling press or transport (wire not falling into pieces) and reuse; additionally, oils, heating gases and sorbents as well as half-processed carbon fractions or active carbon are obtained.

There is no doubt that an advantage of the solution in line with the invention consists of the possibility to obtain improved, much more uniform metal fractions in the processing of scrapped cars and/or new products, i.e. products of the tyre pyrolysis not attained earlier in a single automated process on a single process line and, in particular, directly in the course of the processing of scrapped cars. Another advantage is the recovery, in the same process, of nearly 100% of the metal cord from the car tyre rubber, only after the purification of products of pyrolysis.

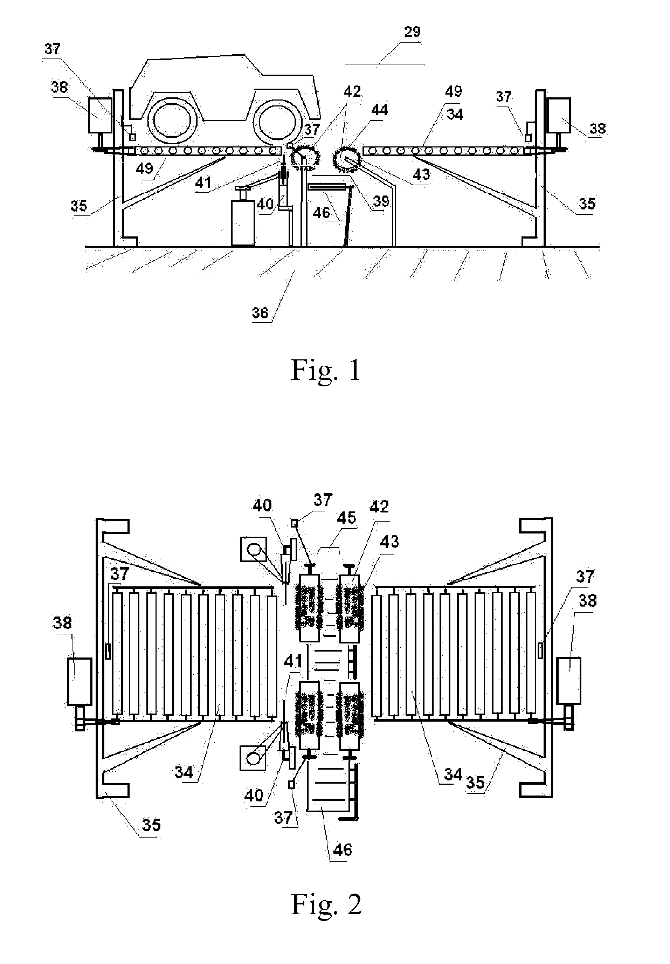

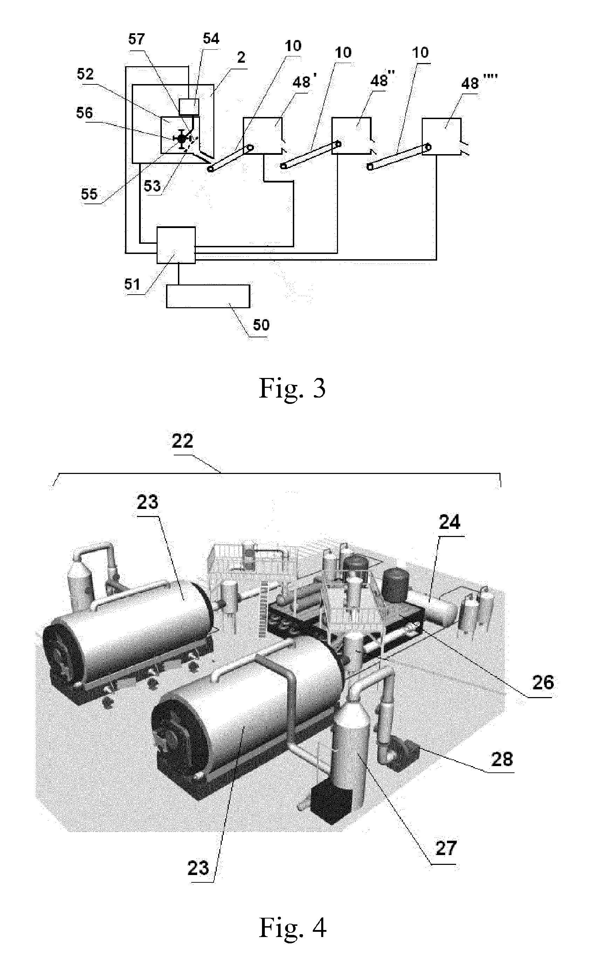

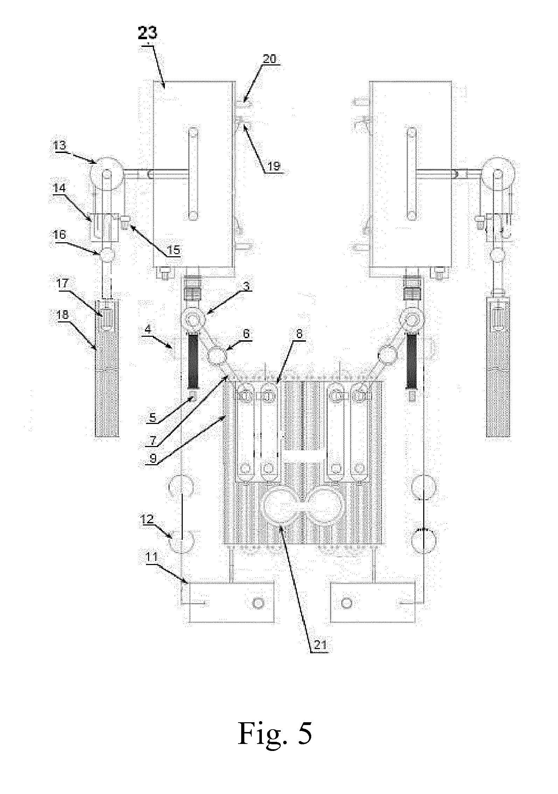

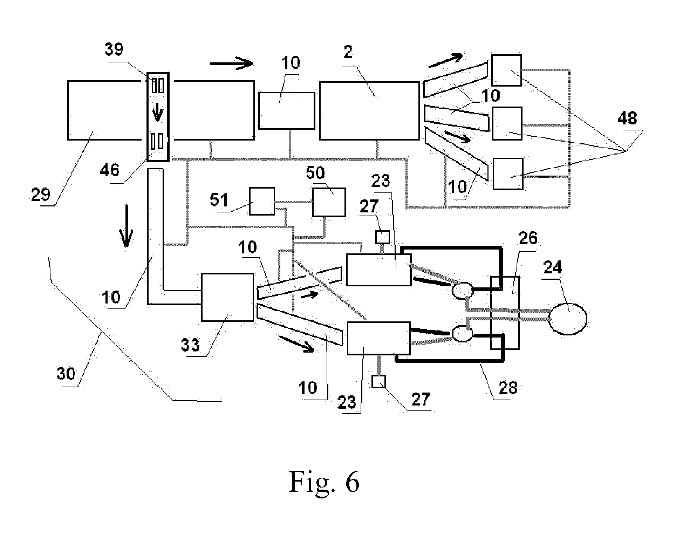

The solution in line with the invention is presented on an execution example on the drawing, with Fig. 1 presenting schematic details of the car tyre separator as a side view, Fig. 2 presenting schematic details of the car tyre separator as a canopy view, Fig. 3 presenting a scheme of a fragment of the process line with the shredding crusher and its separators, Fig. 4 presenting a 3D view of the furnace-reaction system with certain multiple components, Fig. 5 presenting schematic details of the furnace-reaction system with certain multiple components and Fig. 6 presenting a scheme of the process line for the processing of scrap with a system of feeders.

An exemplary process line 30 for the processing of scrapped cars and, in particular, their recycling according to the invention contains the power supply system 50, control system 51, separators 48 and a shredding crusher 2. The shredding crusher 2 has a shredding chamber 52, a grid 53, a power unit 54 and a shaft 55 coupled with the power unit 54 and equipped with hammers 56 mounted on the shaft 55 and shifted with respect to each other at the 90 degrees angle; the grid 53 has channels 57 and is located beneath the shaft 55 with hammers 56 in the shredding chamber 52 while separators 48 are connected to a shredding crusher 2 with a system of feeders 10. Separators 48 consist of: a magnetic separator 48' and, at the same time, a drum 48" and gravitational 48"" separators. The process line 30 is additionally equipped with an automatic separator of car tyres 29 located in the process line 30 in front of the shredding crusher 2. The separator of car tyres 29 is also connected via a system of feeders 10 and one buffer container 33 with a furnace-reaction system 22; the furnace-reaction system 22 is equipped with at two revolving reaction furnaces 23, containers 24 for pyrolysis products, power supply system 25, cooling system 26, heating system 27 and a flue gas evacuation system 28. The separator of car tyres 29 is equipped with a transport system 34 mounted on a frame 35 attached to the ground 36. The transport system 34 is controlled via barrier infrared sensors 37 with a transport system 34 slide engine 38. The transport system 34 is separated with a scuffing tool 39 in front of which an electrically controlled saw 41 is installed on a drawout actuator 40. A single scuffing tool 39 is made of at least two rotating rollers 42 oriented parallel to each other on which friction components 43 are arranged on the envelope. The rollers 42 turn in opposite directions to the inside and down, with the top surface 44 of rollers 42 located on the height of the transport system 34 while a feeder system 10 conveyor 46 is located under the slit 45 between the rollers 42. The scuffing tool 39, its turning rollers 42 and the drawout actuator 40 as well as the saw 41 are switched on via barrier infrared sensors 37. Certain components of the furnace-reaction system 22 are multiplied. Barrier infrared sensors 37 are similarly multiplied to two pairs in order to control the shift of the transport system 34, its slowing down or acceleration, halt and start up. The car tyre separator 29 transport system 34 contains two conveyors 49 located on the same plane one behind another and separated with two scuffing tools 39; the conveyor 49 is in the form of a roller chain conveyor. The shifter engine 38 of the transport system 34 is multiplied and consists of two units to distribute the drive to individual conveyors 49. The scuffing tool 39 is also multiplied and contains two units with another scuffing tool 39 oriented parallel to the former in the axis of the slit 45 between the rollers 42, symmetrically on two sides of the transport system 34. The drawout actuator 40 with the saw 41 consists of two units to guarantee a faster completion of the process; they are oriented parallel to each other and symmetrically on both sides of the transport system 34. The saw 41 is a circular one. Friction components 43 are in the form of a bearing surface with a high friction coefficient. The drawout actuator 40 is hydraulically controlled and the drawout of the actuator 40 is adjustable.

The furnace-reaction system 22 contains the following components: an initial separator 3, heavy oil container 4, soot transporter 5, catalyst column 6, piping 7, condensation-drainage container 8, a cooler 9, light oil container 11, water fuse 12, atomizer column 13 with the column container 14, sprinkler pump 15, a column with active carbon 16, ventilator 17, smoke evacuation channel 18, a blower 19, oil burner 20, gas burner 21 - they can be assigned to one of the systems indicated above. The process line 30 is controlled locally and via a computer.

## Claims

1. The process line for the processing of scrapped cars, in particular, their recycling, containing a power supply system, control system, separators, a mill and/or a shredding crusher where the mill and/or the shredding crusher have a shredding chamber, a grid, power unit and a shaft coupled with the power unit equipped with hammers mounted on the shaft and shifted with respect to each other; the grid has channels and is placed beneath the shaft with hammers in the shredding chamber while separators are connected to the mill or the shredding crusher with a system of feeders, **characterized in that** it is equipped with an automatic separator of car tyres (29) located in the process line (30) in front of the mill (31) and/or the shredding crusher (31'), where the separator of car tyres (29) is also connected via a system of feeders (32) and at least one buffer container with the furnace-reaction system (22) equipped with at least one revolving reaction furnace (23), containers (24) of pyrolysis products, power supply system (25), cooling system (26), heating system (27) and a flue gas evacuation system (28); the car tyre separator (29) is equipped with a transport system (34) mounted on the frame (35) attached to the ground (36), controlled via barrier infrared sensors (37) with the transport system (34) shift engine (38) and the transport system (34) has a scuffing tool inside (39) or is separated with a scuffing tool (39) in front of which an electrically controlled saw (41) is installed on a drawout actuator (40) while the scuffing tool (39) is made of at least two parallel rotating rollers (42) on which friction components (43)are arranged on the envelope and the rollers (42) rotate in opposite directions to the inside and down; the top surface (44) of rollers (42) is at the height of the transport system (34) while the conveyor (46) of the feeder system (10) is located under the slit (45) between the rollers (42).

2. The process line for the processing of scrapped cars according to claim 1 is **characterized in that** a separator (48) can be a magnetic (48') and/or drum (48") and/or pneumatic (48"') and/or gravitational (48"") one.

3. The process line for automotive scrap processing according to claim 1 or claim 2 is **characterized in that** the furnace-reaction system (22) or its component is multiplied.

4. The process line for automotive scrap processing according to claim 1 or claim 2 or claim 3 is **characterized in that** the barrier infrared sensors (37) are multiple.

5. The process line for the processing of scrapped cars according to any of the claims from 1 to 4 is **characterized in that** the car tyre separator (29) transport system (34) contains two conveyors (49) located on the same plane one behind another; the conveyor (49) is in the form of a chain conveyor and, at the same time, a roller or belt conveyor.

6. The process line for the processing of scrapped cars according to any of the claims from 1 to 5 is **characterized in that** the transport system (34) shift engine (38) is multiplied.

7. The process line for the processing of scrapped cars according to any of the claims from 1 to 6 is **characterized in that** the scuffing tool (39) is multiplied with both scuffing tools (39) oriented parallel and next to each other in the axis of the slit (45) between the rollers (42), symmetrically on two sides of the transport system (34).

8. The process line for the processing of scrapped cars according to any of the claims from 1 to 7 is **characterized in that** the drawout actuator (40) with the saw (41) is multiplied with both devices oriented parallel and arranged symmetrically on two sides of the transport system (34) while the saw(40) is beneficially a circular (41') one.

9. The process line for the processing of scrapped cars according to any of the claims from 1 to 8 is **characterized in that** friction components (43) are bolts or barbs or heels or a bearing surface with a high friction coefficient.

10. The process line for the processing of scrapped cars according to any of the claims from 1 to 8 is **characterized in that** the drawout actuator (40) is hydraulically or pneumatically controlled and the drawout of the actuator (40) is adjustable.

11. The process line for the processing of scrapped cars according to any of the claims from 1 to 10 is **characterized in that** the furnace-reaction system (22) contains such components as: an initial separator (3), heavy oil container (4), soot transporter (5) from the reactor, catalyst column (6), piping (7), condensation-drainage container (8), a cooler (9), light oil container (11) water fuse (12), atomizer column (13) with the column container (14), sprinkler pump (15), a column with active carbon (16), ventilator (17), smoke evacuation channel (18), a blower (18), a blower (19), oil burner (20), gas burner (21).

12. The process line for the processing of scrapped cars according to any of the claims from 1 to 11 is **characterized in that** it is remotely controlled.

13. The process line for the processing of scrapped cars according to any of the claims from 1 to 12 is **characterized in that** it is controlled via a computer.
